# EUROPEAN PATENT APPLICATION

(11) **EP 1 988 502 A1**
(43) Date of publication of application: **05.11.2008**
(21) Application number: 07107509.7
(22) Date of filing: 04.05.2007
(51) Int. Cl.: G06T 1/60, G06T 7/20

(54) **Method and device for retrieving a test block from a blockwise stored reference image**

(71) Applicant: Deutsche Thomson OHG, 30625 Hannover (DE)
(72) Inventor: Borsum, Malte, 30655, Hannover (DE); Gaedke, Klaus, 30659, Hannover (DE); Georgi, Marco, 30855, Langenhagen (DE)

(57) **Abstract**

The invention relates to retrieving a test block (180) at a freely selectable position from a blockwise stored reference image.

A method for retrieving a test block (180) from a blockwise stored reference image is described. Said method comprises the steps of retrieving a reference block (110) and generating from the reference block (110) a first corona block (130, 140, 160, 170). Then, the test block (180) is composed using a subsection of the reference block (110) and a subsection of the first corona block(130, 140, 160, 170).

In generating the corona (130, 140, 160, 170) blockwise when needed, the corona (130, 140, 160, 170) needs not to be kept in the blockwise accessible storage device (10). This saves storage capacity.

## Description

### Background

The invention relates to retrieving a test block from a blockwise stored reference image.

Storing a reference image as blocks of two or more pixels in a blockwise accessible storage device has the advantage of direct access to image blocks at regular positions. This advantage comes along with the drawback that blocks at positions other than the regular positions are not directly accessible.

But for motion estimation, test block retrieval at arbitrary positions is required.

That is, for motion estimation a given block of a first image is compared with a variety of test blocks at different positions in a second image. Then, motion of said given block between said first and second image is estimated by help of the position of the given block and the position of the most similar test block.

Motion estimation is useful in a number of technical applications varying from robot vision to video compression. Earlier video compression techniques were restricted to comparing said given block with test blocks which are positioned entirely within the reference image. But, MPEG4 also allows for comparing said given block with a test block which intersects the reference image boundary. Said test block is partially outside the reference image. It comprises pixels which do not belong to the reference image.

To do so, the reference image is expanded with a corona. The corona surrounds the reference image and its pixels are generated by replicating pixels of the reference image. The corona is stored together with the reference image. Disadvantageously, the corona requires additional storage capacity.

### Invention

This disadvantage is removed by the method for retrieving a test block from a blockwise stored reference image according to claim 1.

Said method comprises the steps of retrieving a reference block and generating from the reference block a first corona block. Then, the test block is composed from a subsection of the reference block and from a subsection of the first corona block.

In generating the corona blockwise when needed the corona need not to be kept in the blockwise accessible storage device. This saves storage capacity.

Preferably, the method further comprises retrieving a block adjacent to the reference block and generating from the adjacent block an adjacent corona block. Then, the test block is also composed from a subsection of the adjacent block and from a subsection of the adjacent corona block.

This increases the number of retrievable test block positions.

In a preferred embodiment generating the first corona block comprises replicating a boundary column of the reference block and generating the adjacent corona block comprises replicating a boundary column of the adjacent block.

In another preferred embodiment generating the first corona block comprises replicating a boundary row of the reference block and generating the adjacent corona block comprises replicating a boundary row of the adjacent block.

In yet another preferred embodiment of the method a second corona block and a corner corona block are generated from the reference block. Then, the test block is composed also from a subsection of the second corona block and from a subsection of the corner corona block.

This increases the number of retrievable test block positions.

Said yet another embodiment preferably comprises generating the first corona block by replicating a boundary row of the reference image, generating the second corona block by replicating a boundary column of the reference image, and generating the corner corona block by replicating a corner pixel of the reference block wherein the corner pixel is comprised in said boundary row and in said boundary column.

Generating a corona block from a boundary column, a boundary row or a corner pixel gives a good estimation of the corona.

Preferably generating any of the corona blocks comprises generating pixels in parallel.

Then, retrieval of the test block can be achieved faster.

The invention is further related to a method which comprises the steps of retrieving a reference block and three adjacent blocks and forming the test block by combining a subsection of the reference block with a subsection of each of the three adjacent blocks.

This increases the number of retrievable test block positions.

A test block retrieved according to the inventive method can be used advantageously if it is compared with a block from another image for motion estimation.

The invention is further related to a device for retrieving a test block from a blockwise stored reference image with the features of claim 10.

Said device comprises means for retrieving a block and means for generating from the retrieved block a corona block. The device further comprises means for composing the test block from a subsection of the retrieved block and from a subsection of the generated corona block.

Preferably, the means for generating a corona block are adapted to generate pixels of the corona block in parallel by replicating a column, a row or one pixel of the retrieved block.

Said device allows for fast test block retrieval.

### Drawings

Exemplary embodiments of the invention are illustrated in the drawings and are explained in more detail in the following description.

In the figures:
- Fig. 1: depicts an exemplary embodiment of a device for retrieving a test block positioned at a test block position in a blockwise stored reference image and
- Fig. 2: depicts a section of a reference image plus surrounding corona blocks and a test block at a test block position.

### Exemplary embodiments

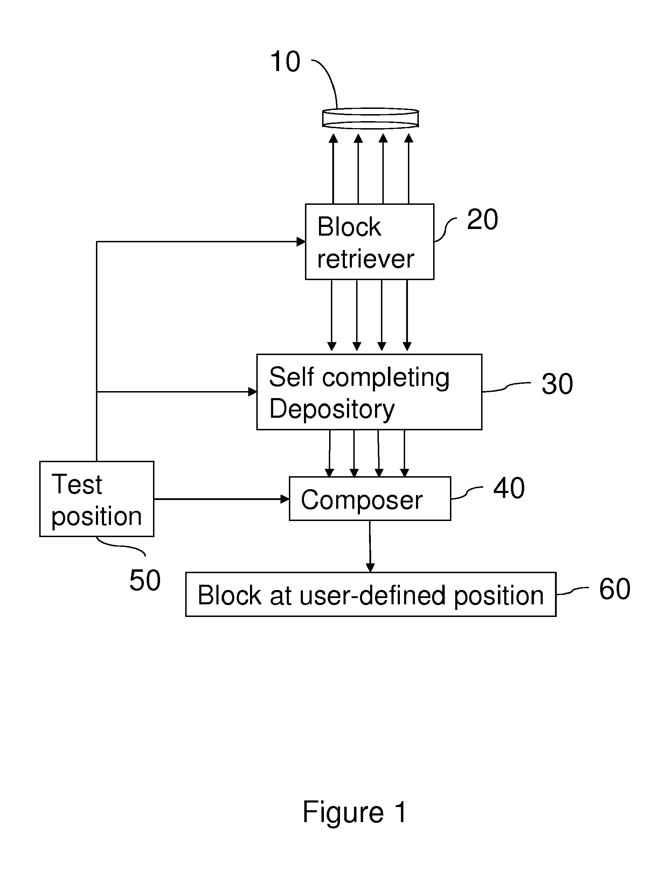

Figure 1 depicts a blockwise accessible storage device 10, a block retriever 20, a self-completing depository 30 and a composer 40 forming an exemplary embodiment of the inventive device for retrieving a test block from a blockwise stored reference image.

The block retriever 20 receives a test position as input. It determines a reference block in the reference image wherein the reference block intersects a test block positioned at the test position 50. Then, the block retriever 20 retrieves the reference block from the blockwise accessible storage device 10. If the test position corresponds to a test block which intersects adjacent blocks in the reference image, these adjacent blocks are retrieved as well. The reference block and the adjacent blocks, if there are any, are deposited in the self-completing depository 30. The self-completing depository 30 is adapted to generate pixels of different types of corona block in parallel. The corona blocks differ in being generated by replicating a row, a column or a corner pixel of a deposited block. If the test position corresponds to a test block which intersects one or more corona blocks surrounding the reference image, this is detected by the self-completing depository 30 by help of the received test position and/or by help of the number of adjacent blocks deposited. Then, the self-completing depository 30 generates the intersected corona blocks. Generated corona blocks are deposited as well in the self-completing depository 30. The blocks deposited in the self-completing depository 30 are accessed by the composer 40. The composer 40 takes the test position as input and composes a test block by combining the respective intersections of the deposited blocks.

Thus, though the blockwise accessible storage device 10 allows only for direct access of blocks at predefined periodic positions by help of the exemplary block retrieval device a test block at an arbitrary position can be retrieved from said blockwise accessible storage device 10. The set of possible positions include positions of blocks which intersect the boundary of the image.

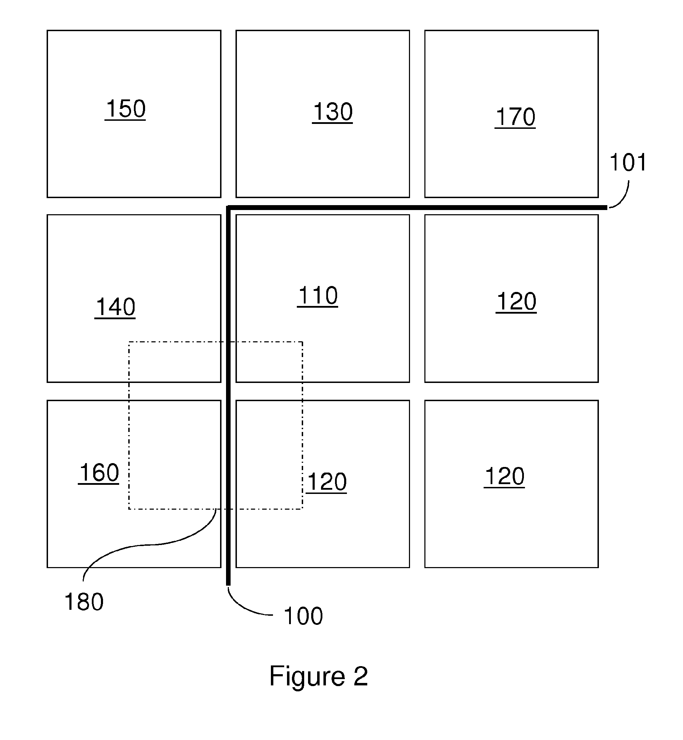

Figure 2 depicts a section of a reference image plus surrounding corona blocks. The corona blocks are not stored permanently but generated on demand and deposited temporarily. The section comprises a boundary column 100 and a boundary row 101 of the reference image wherein the boundary column 100 and the boundary row 101 meet at a corner. Positioned in said corner is a reference block 110 with a boundary column and a boundary row which coincide partly with the boundary column 100, respectively the boundary row 101 of the reference image. Thus, the corner pixel of the reference image and the reference block 110 coincide, also.

The reference block 110 is surrounded by three adjacent blocks 120 which form part of the reference image and five corona blocks. The corona blocks comprise a row corona block 130, a column corona block 140, a corner corona block 150, an adjacent column corona block 160 with a boundary column which coincides partly with the boundary of the reference image and an adjacent row corona block 170 with a boundary row which coincides partly with the boundary of the reference image. It shall be stressed once more, that the corona blocks 130, 140, 150, 160, 170 are not kept in the blockwise accessible storage device 10 but generated when needed as described below. It also should be noted, that only the reference block is retrieved from the storage device 10 for sure while retrieval of the adjacent blocks 120 depends on the test position 50.

Figure 2 further shows a test block 180 at a position where it intersects the reference block 110, one of the adjacent blocks 120, the column corona block 140 and the adjacent column corona block 160.

By help of figure 1 and 2 retrieval of a test block is described in the following.

According to the test position 50 the block retriever 20 determines the number of blocks to retrieve. This may include determining which of the required blocks are already comprised in the self-completing depository 30 and omitting the determined blocks from retrieval.

Given, the test position 50 refers to a test block 180 which overlaps the reference image only partly. That is, the test block is positioned partly outside the reference image. Given further, the test block comprises a corner pixel of the reference image. Then, only the reference block 110 is retrieved. This retrieved reference block 110 has a boundary column which is part of the boundary column 100 of the reference image and a boundary row which is part of the boundary row 101 of the reference image.

Given, the test position 50 refers to a test block 180 which overlaps the reference image only partly but does not comprise any corner pixel of the reference image. Then, the reference block 110 and one block 120 adjacent to the reference block 110 are retrieved. The retrieved reference block 110 and the retrieved adjacent block 120 have a boundary column, each, which is part of the boundary column 100 of the reference image. Alternatively, the retrieved reference block 110 and the retrieved adjacent block 120 have a boundary row, each, which is part of the boundary row 101 of the reference image.

Given, the test position 50 refers to a test block 180 which overlaps the reference image completely. That is the test block is positioned completely inside the reference image. Then, a reference block 110 and three adjacent blocks 120 are retrieved. The reference block 110 and the three adjacent blocks 120 form a square of two times two blocks which comprises the test block the test position 50 refers to.

The retrieved blocks 110, 120 are deposited in the self-completing depository 30.

Dependent on the number of retrieved blocks 110, 120 and/or the test position 50 the self-completing depository 30 generates corona blocks 130, 140, 150, 160, 170 such that in total four blocks are present. The self-completing depository 30 completes itself either upon reception of the test position 50 or upon detection of the number and positions of the retrieved blocks 110, 120 deposited by the block retriever 20. If the self-completing depository 30 is adapted to detect the number and positions of the retrieved and deposited blocks 110, 120, the test position 50 is not necessarily provided as input to the self-completing depository 30.

If the test position 50 refers to a test block 180 which overlaps the reference image only partly and comprises a corner pixel of the reference image or if only the reference block 110 is deposited in the self-completing depository 30, three corona blocks 130, 140, 150 are generated:

The column corona block 140 with columns which equal that boundary column of the reference block 110, which is part of the boundary column 100 of the reference image, is generated. Furthermore, the row corona block 130 with rows which equal that boundary row of the reference block 110, which is part of the boundary row 101 of the reference image, is generated. And, the corner corona block 150 with pixels, which equal the corner pixel of the reference image, is generated.

If the test position 50 refers to a test block 180 which overlaps the reference image only partly but does not comprise any corner pixel of the reference image or if the reference block 110 and exactly one adjacent block 120 is deposited in the self-completing depository 30, two corona blocks 130, 170 or 140, 160 are generated:

If the reference block 110 and the one adjacent block 120 have a boundary column, each, which is part of the boundary column 100 of the reference image two corona blocks 140, 160 are generated. A column corona block 140 is generated, which comprises columns which equal said boundary column of the reference block 110. And an adjacent column corona block 160 is generated, which comprises columns which equal said boundary column of the adjacent block 120.

Otherwise, if the reference block 110 and the one adjacent block 120 have a boundary row, each, which is part of the boundary row 101 of the reference image and two row corona blocks 130, 170 are generated. A row corona block 130 is generated, which comprises rows which equal said boundary row of the reference block 110. And an adjacent row corona block 170 is generated, which comprises rows which equal said boundary row of the adjacent block 120.

If the test position 50 refers to a test block 180 which overlaps the reference image completely or if the reference block 110 and three adjacent blocks 120 is deposited in the self-completing depository 30, no corona blocks are generated.

Instead by replication of boundary rows, boundary columns or corner pixels, generation of a corona block may be realised by zero-padding, i.e. generation of a corona block with pre-defined values, or by mirroring, i.e. replication of all rows respectively columns of the block the corona block is generated from in reverse or opposite order.

The self-completing depository 30 is adapted to generate some or all pixels of a corona block in parallel by replicating pixels of a column, of a row or a single pixel of the block from which the corona block is generated.

After the self-completing depository 30 completed itself, the composer 40 forms the desired test block according to the provided test position 50. This is done either by selecting one of the blocks in the self-completing depository 30 or by combining subsections of two or more of said blocks in the self-completing depository 30. Then, the composer 40 outputs the formed block 60.

## Claims

1. Method for retrieving a test block (180) from a blockwise stored reference image, the method comprises the steps of:
- retrieving a reference block (110),
- generating from the reference block (110) a first corona block (130, 140), and
- composing the test block (180) by using a subsection of the reference block (110) and a subsection of the first corona block (130, 140).

2. Method according to claim 1, further comprising
- retrieving a block (120) adjacent to the reference block (110),
- generating from the adjacent block (120) an adjacent corona block (160, 170), and
- composing the test block (180) comprises using also a subsection of the adjacent block and a subsection of the adjacent corona block (160, 170).

3. Method according to claim 2, wherein
- generating the first corona block (140, 160) comprises replicating a boundary column of the reference block (110) and
- generating the adjacent corona block (140, 160) comprises replicating a boundary column of the adjacent block (120).

4. Method according to claim 2, wherein
- generating the first corona block (130, 170) comprises replicating a boundary row of the reference block (110) and
- generating the adjacent corona block (130, 170) comprises replicating a boundary row of the adjacent block (120).

5. Method according to claim 1, further comprising
- generating from the reference block (110) a second corona block (130, 140) and a corner corona block (150), wherein
- composing the test block (180) comprises using also a subsection of the second corona block (130, 140) and a subsection of the corner corona block (150).

6. Method according to claim 5, wherein
- generating the first corona block (130, 140) comprises replicating a boundary row of the reference image,
- generating the second corona block (130, 140) comprises replicating a boundary column of the reference image, and
- generating the corner corona block (150) comprises replicating a corner pixel of the reference block (110) wherein the corner pixel is comprised in said boundary row and in said boundary column.

7. Method according to any of the preceding claims, wherein
- generating a corona block (130, 140, 150, 160, 170) comprises generating pixels in parallel.

8. Method according to any of the preceding claims, wherein the test block is compared with a block from another image for motion estimation.

9. Device for retrieving a test block (180) from a blockwise stored reference image, the device comprises:
- means for retrieving a block (110, 120),
- means for generating from the retrieved block (110, 120) a corona block (130, 140, 160, 170), and
- means for composing the test block (180) from a subsection of the retrieved block (110) and from a subsection of the generated corona block (130, 140, 160, 170).

10. Device according to claim 9, wherein
- the means for generating (30) a corona block (130, 140, 150, 160, 170) are adapted to generate pixels of the corona block (130, 140, 150, 160, 170) in parallel by replicating a column, a row or one pixel of the retrieved block (110, 120).
